# EUROPEAN PATENT APPLICATION

(11) **EP 4 164 330 A1**
(43) Date of publication of application: **12.04.2023**
(21) Application number: 21817860.6
(22) Date of filing: 01.06.2021
(51) Int. Cl.: H04W 76/27

(54) **METHOD AND DEVICE FOR LEAVING NETWORK AND TERMINAL**

(30) Priority: 03.06.2020 CN 202010495944
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN); BAO, Wei, Dongguan, Guangdong 523863 (CN)
(74) Representative: Raffay & Fleck
(86) International application number: PCT/CN2021/097639
(87) International publication number: WO 2021/244518

(57) **Abstract**

Provided in the present invention are a method and device for leaving a network and a terminal. The method comprises: sending a leaving message to a network side, and starting a leaving waiting timer; in a first case, performing an operation for leaving the network, wherein the first case comprises any one of the following: the leaving waiting timer expires; and receiving a target message before the leaving waiting timer expires.

## Description

### CROSS-REFERENCE TO RELATED APPLICATIONS

This application claims priority to Chinese Patent Application No. 202010495944.6 filed in China on June 3, 2020, which is incorporated herein by reference in its entirety.

### TECHNICAL FIELD

This application relates to the field of communications technologies, and in particular, to a method and an apparatus for leaving a network, and a terminal.

### BACKGROUND

In some communication scenarios, terminals need to leave a network. For example, a terminal supporting a plurality of cards needs to send a leaving notification to an original network when switching to a different network, to avoid network statistics errors caused by unsynchronized statuses of the terminal and the network, and to avoid affecting subsequent service processing. However, if the terminal leaves the network only after receiving a leaving response message sent by the network, there may be a case that the terminal cannot leave the network in a timely manner due to a relatively large delay on a side of the network sending the leaving response message or a failure in sending on a side of the network, causing a relatively large delay of the terminal leaving the network.

### SUMMARY

This application provides a method and an apparatus for leaving a network, and a terminal, which can resolve a problem of a relatively large delay of the terminal leaving the network.

According to a first aspect, this application provides a method for leaving a network, applied to a terminal, and including:
sending a leaving message to a network side, and starting a leaving wait timer; and
performing a leaving network operation in a first case, where the first case includes any one of the following:
   the leaving wait timer expires; and
   a target message is received before the leaving wait timer expires.

According to a second aspect, this application provides an apparatus for leaving a network, applied to a terminal, and including:
a first module, configured to send a leaving message to a network side, and start a leaving wait timer; and
a second module, configured to perform a leaving network operation in a first case, where the first case includes any one of the following:
   the leaving wait timer expires; and
   a target message is received before the leaving wait timer expires.

According to a third aspect, this application provides a terminal, including: a memory, a processor, and a program or an instruction stored on the memory and executable on the processor, where when the program or the instruction is executed by the processor, the steps in the method for leaving a network provided in this application are implemented.

According to a fourth aspect, this application provides a readable storage medium, storing a program or an instruction, where when the program or the instruction is executed by a processor, the steps in the method for leaving a network provided in this application are implemented.

In embodiments of this application, a leaving message is sent to a network side, and a leaving wait timer is started; and a leaving network operation is performed in a first case, where the first case includes any one of the following: the leaving wait timer expires; and a target message is received before the leaving wait timer expires. This can allow the terminal to perform the leaving network operation in a timely manner, to reduce a delay of the terminal leaving the network.

### BRIEF DESCRIPTION OF THE DRAWINGS

FIG. 1 is a structural diagram of a network system to which an embodiment of this application is applicable;
FIG. 2 is a flowchart of a method for leaving a network according to an embodiment of this application;
FIG. 3 is a schematic diagram of a method for leaving a network according to an embodiment of this application;
FIG. 4 is a schematic diagram of another method for leaving a network according to an embodiment of this application;
FIG. 5 is a schematic diagram of another method for leaving a network according to an embodiment of this application;
FIG. 6 is a schematic diagram of another method for leaving a network according to an embodiment of this application;
FIG. 7 is a schematic diagram of another method for leaving a network according to an embodiment of this application;
FIG. 8 is a schematic diagram of another method for leaving a network according to an embodiment of this application;
FIG. 9 is a structural diagram of an apparatus for leaving a network according to an embodiment of this application; and

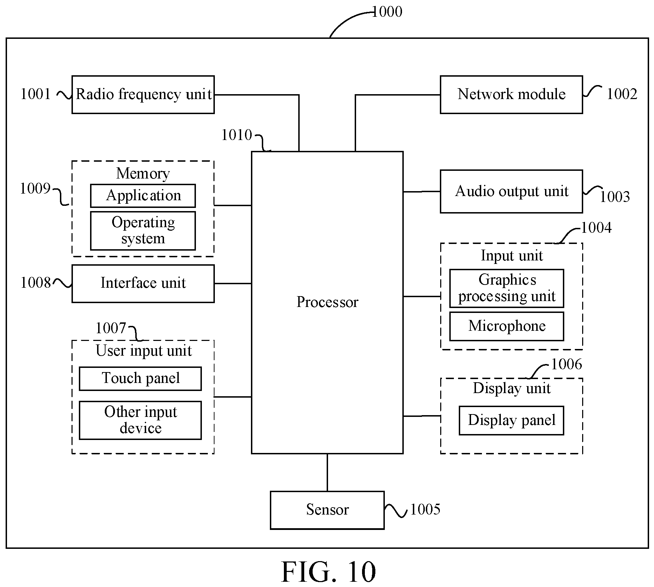

FIG. 10 is a structural diagram of a terminal according to an embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person skilled in the art based on the embodiments of this application without creative efforts shall fall within the protection scope of this application.

In this specification and the claims of this application, the terms "first", "second", and so on are intended to distinguish similar objects but do not necessarily indicate a specific order or sequence. It should be understood that the data termed in such a way are interchangeable in appropriate circumstances, so that the embodiments of this application described herein can be implemented in orders other than the order illustrated or described herein. In addition, the objects distinguished by "first" and "second" are usually of a same type, without limiting a quantity of objects, for example, there may be one or more first objects. In addition, the use of "and/or" in the description and the claims means at least one of the connected objects. The character "/" generally indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. However, the following description describes a New Radio (New Radio, NR) system for exemplary purposes, and uses NR terms in most of the following descriptions, although these technologies are also applicable to applications other than the NR system application, such as a 6th generation (6th Generation, 6G) communication system.

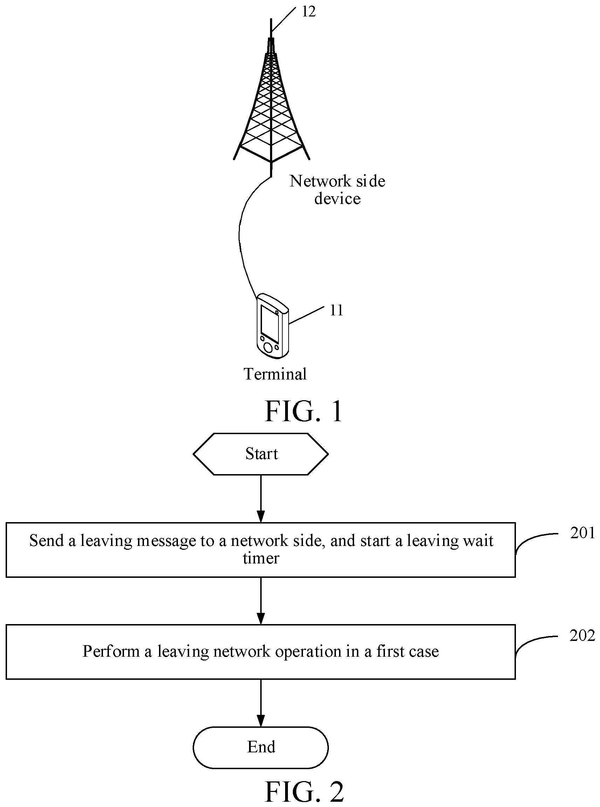

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a mobile phone, a tablet computer (Tablet Personal Computer), a laptop computer (Laptop Computer) or referred to as a notebook computer, a personal digital assistant (Personal Digital Assistant, PDA), a palmtop computer, an netbook, an ultra-mobile personal computer (ultra-mobile personal computer, UMPC), a mobile Internet device (Mobile Internet Device, MID), a wearable device (Wearable Device), or vehicular user equipment (VLTE), pedestrian user equipment (PUE), and other terminal-side devices. The wearable device includes bands, headsets, glasses, or the like. It should be noted that, a specific type of the terminal 11 is not limited in this embodiment of this application. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a Wi-Fi node, a transmitting/receiving point (Transmitting Receiving Point, TRP), or some other suitable term in the field, provided that a same technical effect is achieved. The base station is not limited to a specific technical term. It should be noted that, in this embodiment of this application, only a base station in an NR system is used as an example, but the specific type of the base station is not limited.

A method for leaving a network provided in the embodiments of this application are described in detail by using specific embodiments and application scenarios with reference to the accompanying drawings.

FIG. 2 is a flowchart of a method for leaving a network according to an embodiment of this application. The method is applied to a terminal, and as shown in FIG. 2, includes the following steps:

Step 201. Send a leaving message to a network side, and start a leaving wait timer.

The sending a leaving message to a network side may be sending a leaving message to a network side device.

The leaving message may be used to request the network side device to leave the terminal, or to notify the network side device that the terminal leaves the network.

Duration of the leaving wait timer (Leaving wait Timer) may represent a waiting time for the terminal to leave the network. In addition, the leaving wait timer may be triggered by sending the leaving message to the network side. In addition, a time point for starting the leaving wait timer may be when a leaving message triggered by a higher layer is received, that is, when the leaving message triggered by the higher layer is received, the leaving wait timer is started. Alternatively, a time point for starting the leaving wait timer may be when the leaving message is sent to a bottom layer, that is, when the leaving message is sent to the bottom layer, the leaving wait timer is started.

Step 202. Perform a leaving network operation in a first case, where the first case includes any one of the following:
the leaving wait timer expires; and
a target message is received before the leaving wait timer expires.

The leaving network operation may be an operation for leaving the network.

The performing a leaving network operation in a first case may be: performing the leaving network operation if either of the conditions that the leaving wait timer expires and that a target message is received before the leaving wait timer expires is met. For example, the leaving network operation is performed if the target message is received before the leaving wait timer expires. For another example, the leaving network operation is performed if the leaving wait timer expires. The performing the leaving network operation if the leaving wait timer expires may be: if the target message is not received before the timer expires, performing the leaving network operation when the timer expires.

In addition, in this embodiment of this application, the first case may also be referred to as a leaving condition (Leaving Condition).

In this embodiment of this application, through the foregoing step, the leaving network operation can be performed in a case that the leaving wait timer expires or the target message is received before the leaving wait timer expires. In this way, the terminal can perform the leaving network operation in a timely manner, to reduce a delay of the terminal leaving the network, for example, to avoid an excessively large delay in sending the target message on the network side or a failure in sending the target message on the network side.

In an optional implementation, the target message includes at least one of the following:
an acknowledgment message fed back by a radio link control (radio link control, RLC) layer of the terminal, where the acknowledgment message is used to acknowledge successful sending of the leaving message;
a leaving response message sent by the network side; and
a first radio resource control (radio resource control, RRC) release message sent by the network side.

The acknowledgment message may be an acknowledgment message fed back by the RLC layer to the RRC layer in a case that the leaving message is successfully sent to the network side. For example, the RRC layer sends the leaving message to the network in an acknowledged mode (Acknowledged Mode, AM), and performs the leaving network operation after receiving the acknowledgment message from the RLC layer.

The leaving response message (Leaving Response Message) may represent a response of the network side to the leaving message. For example, the leaving response message may be a response message sent by the network side in response to the leaving message. In addition, the leaving response message is a NAS signaling message or an RRC signaling message.

Optionally, the leaving response message includes at least one of the following:
a non-access stratum (Non-Access-Stratum, NAS) service accept message (Service Accept); and
a second RRC release message.

Certainly, the leaving response message may alternatively be another specific message.

The first RRC release message may be an RRC release message proactively sent by the network side, for example, an RRC release message sent by the network side without receiving the leaving message.

In this implementation, the network can be left before the leaving wait timer expires and after the acknowledgment message indicating that the RLC successfully sends the leaving message is received. Alternatively, the network can be left before the leaving wait timer expires and after the leaving response message is received from the network. Alternatively, the network can be left before the leaving wait timer expires and after the RRC release message is received.

In an optional implementation, the leaving network operation includes at least one of the following:
locally releasing (Local Release) an RRC connection;
switching to an inactive (Inactive state) or an idle state (Idle state);
stopping data sending for the RRC connection; and
stopping data reception for the RRC connection.

The switching to an inactive state or an idle state may be: releasing the RRC connection based on the RRC release message sent by the network side, and switching to the inactive state or the idle state.

The stopping data sending for the RRC connection may be stopping data sending in a current RRC connection. The stopping data reception for the RRC connection may be stopping data reception in a current RRC connection.

In an optional implementation, the leaving wait timer includes:
a NAS leaving wait timer or an RRC leaving wait timer.

Starting the RRC leaving wait timer may include:
starting the RRC leaving wait timer when an RRC layer of the terminal sends the leaving message to the RLC layer; or
starting the RRC leaving wait timer when an RRC layer of the terminal receives the leaving message sent by a NAS.

In this implementation, the RRC leaving wait timer can be started after the RRC layer receives the leaving message from the NAS. In addition, the RRC leaving wait timer can be started after the RRC layer sends the leaving message to the RLC layer. For example, the RRC layer sends the leaving message to the network in the AM mode, waits for sending of the acknowledgment message from the RLC layer, and starts the leaving wait timer at the same time.

Optionally, starting the NAS leaving wait timer includes:
starting the NAS leaving wait timer when a NAS of the terminal sends the leaving message to an RRC layer.

In this implementation, the NAS can start the NAS leaving wait timer after sending the leaving message to the RRC. For example, the NAS layer sends the leaving message to the network, waits for a response message from the NAS, and starts the leaving wait timer at the same time. Certainly, in this embodiment of this application, is it not limited to starting the NAS leaving wait timer when the NAS sends the leaving message to the RRC layer. For example, the NAS leaving wait timer may be started when the NAS obtains (for example, generates) a leaving message.

In an optional implementation, if the first case includes that a target message is received before the leaving wait timer expires, the method further includes:
stopping the leaving wait timer in a case that the target message is received before the leaving wait timer expires.

In this implementation, the leaving wait timer can be stopped in a timely manner to reduce power consumption of the terminal. For example,
the leaving wait timer is stopped after acknowledgement information indicating that the RLC successfully sends the leaving message is received. Alternatively, the leaving wait timer is stopped after the leaving response message from the network is received. Alternatively, the leaving wait timer is stopped after the RRC release message is received.

In an optional implementation, the leaving message is used to request to suspend a service, or the leaving message is used to request to release a connection.

The leaving message may represent that the terminal requests to suspend a service for a period of time or release a current connection. Further, the leaving message may be a NAS signaling message or an RRC signaling message.

Optionally, the leaving message includes at least one of the following:
a service request message (Service Request);
a terminal assistance information message (UE Assistance Information); and
an RRC leaving message (Leaving Message).

Certainly, the leaving message may alternatively be another specific message.

Further, the leaving message may carry content such as a leaving indication (Leaving Indication) or a release indication (Release Indication).

In an optional implementation, duration of the leaving wait timer is agreed in a protocol, or duration of the leaving wait timer is configured by using the following message:
a system message, a NAS message, or an RRC message.

In this implementation, duration of the leaving wait timer can be agreed in a protocol, configured by using a system message, configured by using a NAS message, or configured by using an RRC message. For example, the duration may be 100 ms, 500 ms, or 1 second.

In an optional implementation, the terminal corresponds to a plurality of UEs, the leaving message is sent by first UE in the plurality of UEs, and duration of the leaving wait timer is associated with at least one of the following:
a state of the first UE, a service of the first UE, or a request service of second UE in the plurality of UEs.

That the terminal corresponds to a plurality of UEs may be that the terminal supports a plurality of cards (for example, SIM cards), and each UE corresponds to one card. In addition, the method may be performed by the first UE.

The state of the first UE may be a connected state, a connected discontinuous reception (Connected Discontinuous Reception, CDRX) gap (that is, CDRX gap) state, or a signaling process state. For example, different connected states, different CDRX gaps, or different signaling processes correspond to different duration. This can be specifically set according to a service requirement or a scenario requirement.

The service of the first UE may be a service scenario of the first UE, such as configuring different duration based on a data service (Data service), signaling, or voice (for example, an IMS Voice call), to meet the service requirement.

The request service of the second UE may be a service request type of the second UE, such as voice (Voice Call), data (Data Call), and other services. In this way, different duration can be configured based on the request service of the second UE. If the request service of the second UE has a high requirement on a delay, the duration of the wait timer is configured to be less than a preset threshold, or if the request service of the second UE has a low requirement on a delay, the duration of the wait timer is configured to be greater than a preset threshold, to meet the service requirement of the second UE.

In this embodiment of this application, the UE can send the leaving message to the network, the UE can start the leaving wait timer, and the UE can wait for the leaving condition to be met and then leave the network. The waiting for the leaving condition means that the leaving wait timer expires, or the target message is received before the leaving wait timer expires. In addition, the UE may be any UE of a multi-card terminal, or certainly, may be a terminal supporting only a single card. In other words, the method for leaving a network provided in this embodiment of this application is applicable to any UE of a multi-card terminal, or applicable to a terminal supporting only a single card.

In this embodiment of this application, a leaving message is sent to a network side, and a leaving wait timer is started; and a leaving network operation is performed in a first case, where the first case includes any one of the following: the leaving wait timer expires; and a target message is received before the leaving wait timer expires. This can allow the terminal to perform the leaving network operation in a timely manner, to reduce a delay of the terminal leaving the network.

The method for leaving a network provided in this embodiment of this application is described below by using a plurality of embodiments as examples:

### Embodiment 1

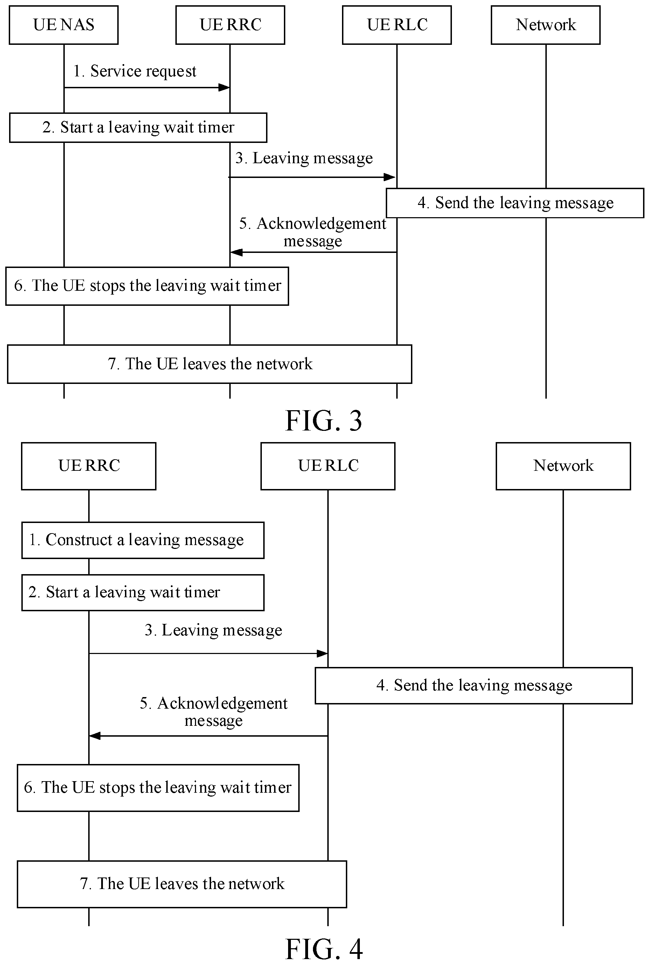

In this embodiment, for example, a network is left if a NAS leaving message is successfully sent. As shown in FIG. 3, the following steps are included:
1. UE sends a NAS leaving message. Without loss of generality, the NAS leaving message may be a service request (Service Request) message, and the message carries a leaving indication (Leaving Indication) or a release indication (Release Indication).
2. The UE starts a leaving wait timer. The leaving wait timer is a NAS timer or an RRC timer.
   The starting a leaving wait timer may include the following implementations:
   I. NAS leaving wait timer: A NAS starts a leaving wait timer when the NAS sends a leaving message to an RRC layer.
   II. RRC leaving wait timer: The RRC layer starts a leaving wait timer when the RRC layer receives the leaving message from the NAS or the RRC layer sends a leaving message to the RLC layer.
3. An RRC layer of the UE sends a leaving message to an RLC layer in an AM mode (Acknowledged Mode).
4. The RLC layer of the UE sends the leaving message to a network side.
5. The RLC layer of the UE sends an acknowledgement (ACK) message to the RRC layer after successfully sending the leaving message.
6. The UE stops the leaving wait timer.
   I. NAS leaving wait timer: The NAS stops the leaving wait timer after the RRC layer acknowledges, to the NAS, sending of the leaving message.
   II. RRC leaving wait timer: The RRC layer stops the leaving wait timer.
7. The RRC layer of the UE locally performs releasing to leave the network.

### Embodiment 2

In this embodiment, for example, a network is left after an RRC leaving message is successfully sent. As shown in FIG. 4, the following steps are included:
1. UE constructs an RRC leaving message. Without loss of generality, the RRC leaving message is a terminal assistance information message (UE Assistance Information message), carrying a release indication (Release Indication) or a leaving indication (Leaving Indication).
2. RRC of the UE starts a leaving wait timer.

The starting a leaving wait timer may include the following implementations:
The RRC starts a leaving wait timer when the RRC receives a leaving trigger event.

The leaving trigger event may be a higher layer message or a message of second UE. For example, the RRC starts the leaving wait timer when the RRC sends the leaving message to RLC.

3. The RRC layer sends a leaving message to the RLC layer in an AM mode (Acknowledged Mode).

4. The RLC layer sends the leaving message to the network, including RLC retransmission.

5. The RLC layer sends an acknowledgement (ACK) message to the RRC layer after successfully sending the leaving message.

6. The RRC layer of the UE stops the leaving wait timer.

7. The RRC layer of the UE locally performs releasing to leave the network.

### Embodiment 3

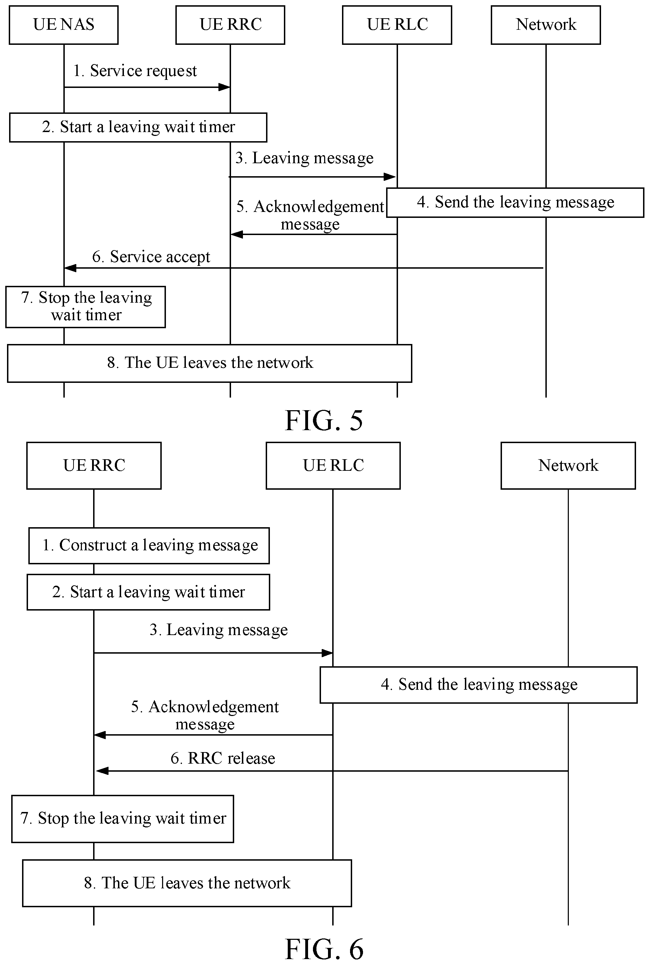

This embodiment is described by using an example in which a network is left after a NAS leaving response message is successfully received. As shown in FIG. 5, the following steps are included:
1. UE sends a NAS leaving message. Without loss of generality, the NAS leaving message may be a service request (Service Request) message, and the message carries a leaving indication (Leaving Indication) or a release indication (Release Indication).
2. A NAS of the UE starts a leaving wait timer.
   The NAS starts the leaving wait timer when the NAS sends a leaving message to an RRC layer.
3. An RRC layer of the UE sends a leaving message to RLC in an AM mode (Acknowledged Mode).
4. The RLC layer of the UE sends the leaving message to the network.
5. The RLC layer of the UE sends an acknowledgement (ACK) to the RRC after successfully sending the leaving message.
6. The UE receives a NAS leaving response message. Without loss of generality, the NAS leaving response message is a Service Accept message.
7. The NAS of the UE stops the leaving wait timer.
8. The RRC layer of the UE locally performs releasing to leave the network.

### Embodiment 4

This embodiment is described by using an example in which a network is left after an RRC leaving response message is successfully received. As shown in FIG. 6, the following steps are included:
A leaving process for successfully receiving the RRC leaving response message includes the following steps:
1. UE constructs an RRC leaving message. Without loss of generality, the RRC leaving message is a terminal assistance information message (UE Assistance Information message), carrying a release indication (Release Indication) or a leaving indication (Leaving Indication).
2. RRC of the UE starts a leaving wait timer.

The starting a leaving wait timer may include the following implementations:

When the RRC receives a leaving trigger event, the RRC starts the leaving wait timer. The leaving trigger event may be a higher layer message or a message of second UE.

When the RRC sends a leaving message to RLC, the RRC starts the leaving wait timer.

3. The RRC layer sends a leaving message to an RLC layer in an AM mode (Acknowledged Mode).

4. The RLC layer sends the leaving message to a network, including RLC retransmission.

5. The RLC layer sends an acknowledgement (ACK) message to the RRC layer after successfully sending the leaving message.

6. The UE receives an RRC leaving response message. Without loss of generality, the RRC leaving response message is an RRC Release message.

7. The RRC of the UE stops the leaving wait timer.

8. The RRC layer of the UE releases a connection and leaves the network.

### Embodiment 5

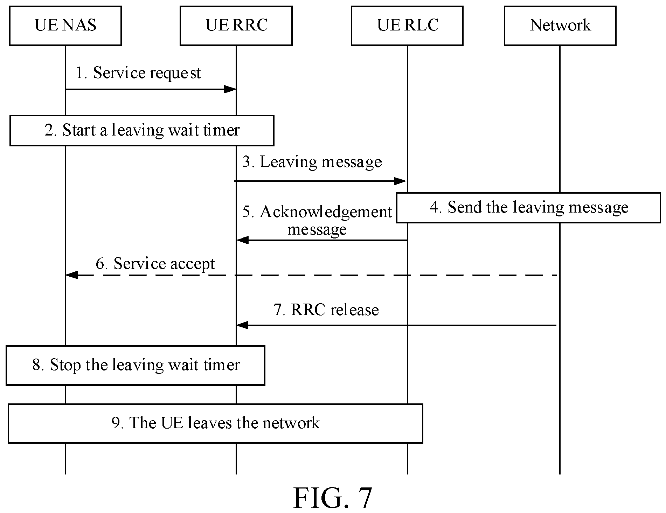

This embodiment is described by using an example in which the network is left after an RRC release message is received. As shown in FIG. 7, the following steps are included:
1. UE sends a NAS leaving message. Without loss of generality, the NAS leaving message may be a service request (Service Request) message, and the message carries a leaving indication (Leaving Indication) or a release indication (Release Indication).
2. The UE starts a leaving wait timer. The leaving wait timer is a NAS timer or an RRC timer.
   The starting a leaving wait timer may include the following implementations:
   I. NAS leaving wait timer: A NAS starts the leaving wait timer when the NAS sends a leaving message to an RRC layer.
   II. RRC leaving wait timer: The RRC layer starts a leaving wait timer when the RRC layer receives the leaving message from the NAS or the RRC layer sends a leaving message to the RLC layer.
3. An RRC layer of the UE sends a leaving message to an RLC layer in an AM mode (Acknowledged Mode).
4. The RLC layer of the UE sends the leaving message to a network side.
5. The RLC layer of the UE sends an acknowledgement (ACK) message to the RRC layer after successfully sending the leaving message.
6. Optionally, the UE receives a NAS leaving response message. Without loss of generality, the NAS leaving response message is a service accept (Service Accept) message.
7. The UE receives an RRC release message (RRC Release).
8. The UE stops the leaving wait timer.
9. The RRC layer of the UE releases a connection and leaves the network.

### Embodiment 6

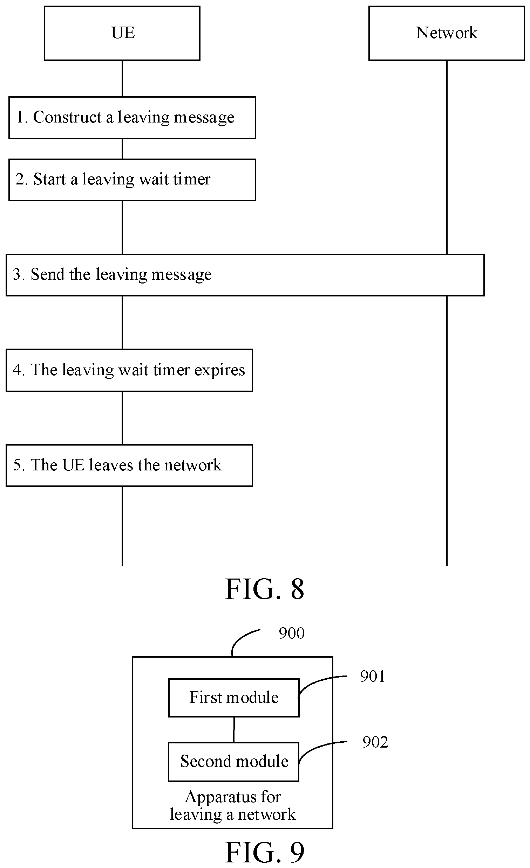

This embodiment is described by using an example in which the network is left when a leaving wait timer expires. As shown in FIG. 8, the following steps are included:
1. A NAS or RRC of UE constructs a leaving message. The leaving message is a NAS leaving message or an RRC leaving message.
2. The UE starts a leaving wait timer. The leaving wait timer is a NAS leaving wait timer or an RRC leaving wait timer.
   The starting a leaving wait timer may include the following implementations:
   I. NAS leaving wait timer: The NAS starts the leaving wait timer when the NAS sends a leaving message to the RRC.
   II. RRC leaving wait timer: The RRC starts the leaving wait timer when the RRC receives the leaving message of the NAS or the RRC sends a leaving message to RLC.
3. The UE sends a leaving message to a network.
4. The leaving wait timer expires before the leaving condition is met.
5. The UE leaves the network.

The following can be implemented in this embodiment of this application:
The UE starts the leaving wait timer when the UE sends the leaving message to the network. If the timer expires, the UE leaves the network.

For the RRC leaving wait timer, an implementation of starting the timer includes:
starting the timer after the RRC receives a higher layer NAS leaving message; or
starting the timer after the RRC sends the leaving message to the RLC.

For the NAS leaving wait timer, an implementation of starting the timer includes:
Start the timer after the NAS sends the leaving message to the RRC.

An implementation method of stopping the timer includes:
stopping the leaving wait timer after acknowledgement information indicating that the RLC layer successfully sends the leaving message is received; or
stopping the leaving wait timer after a leaving response message from the network is received; or
stopping the leaving wait timer after an RRC Release message is received.

In this embodiment of this application, the leaving wait timer is started when the UE sends a NAS leaving message or an RRC leaving message, and the UE waits for an acknowledgement or a response message from the RLC or waits for timeout of a timer, and then leaves the network, so that a possibly long network switching delay is avoided, thereby improving user experience.

FIG. 9 is a structural diagram of an apparatus for leaving a network according to an embodiment of this application. The apparatus is applied to a terminal. As shown in FIG. 9, the apparatus 900 for leaving a network includes:
a first module 901, configured to send a leaving message to a network side, and start a leaving wait timer; and
a second module 902, configured to perform a leaving network operation in a first case, where the first case includes any one of the following:
the leaving wait timer expires; and
a target message is received before the leaving wait timer expires.

Optionally, the target message includes at least one of the following:
an acknowledgment message fed back by a radio link control RLC layer of the terminal, where the acknowledgment message is used to acknowledge successful sending of the leaving message;
a leaving response message sent by the network side; and
a first radio resource control RRC release message sent by the network side.

Optionally, the leaving response message includes at least one of the following:
a non-access stratum NAS service accept message; and
a second RRC release message.

Optionally, the leaving network operation includes at least one of the following:
locally releasing an RRC connection;
switching to an inactive state or an idle state;
stopping data sending for the RRC connection; and
stopping data reception for the RRC connection.

Optionally, the leaving wait timer includes:
a NAS leaving wait timer or an RRC leaving wait timer.

Optionally, starting the RRC leaving wait timer includes:
starting the RRC leaving wait timer when an RRC layer of the terminal sends the leaving message to the RLC layer; or
starting the RRC leaving wait timer when an RRC layer of the terminal receives the leaving message sent by a NAS.

Optionally, starting the NAS leaving wait timer includes:
starting the NAS leaving wait timer when a NAS of the terminal sends the leaving message to an RRC layer.

Optionally, if the first case includes that a target message is received before the leaving wait timer expires, the method further includes:
stopping the leaving wait timer in a case that the target message is received before the leaving wait timer expires.

Optionally, the leaving message is used to request to suspend a service, or the leaving message is used to request to release a connection.

Optionally, the leaving message includes at least one of the following:
a service request message;
a terminal assistance information message; and
an RRC leaving message.

Optionally, duration of the leaving wait timer is agreed in a protocol, or duration of the leaving wait timer is configured by using the following message:
a system message, a NAS message, or an RRC message.

Optionally, the terminal corresponds to a plurality of UEs, the leaving message is sent by first UE in the plurality of UEs, and duration of the leaving wait timer is associated with at least one of the following:
a state of the first UE, a service of the first UE, or a request service of second UE in the plurality of UEs.

The information obtaining apparatus provided in this embodiment of this application can implement the processes in the method embodiment in FIG. 2, and to avoid repetition, details are not described herein again. In addition, the apparatus can reduce a delay of the terminal leaving the network.

It should be noted that, the apparatus for leaving a network in this embodiment of this application may be an apparatus or may be a component, an integrated circuit, or a chip in a terminal.

FIG. 8 is a schematic diagram of a hardware structure of a terminal that implements an embodiment of this application.

The terminal 800 includes, but is not limited to: a radio frequency unit 801, a network module 802, an audio output unit 803, an input unit 804, a sensor 805, a display unit 806, a user input unit 807, an interface unit 808, a memory 809, a processor 810, and other components.

A person skilled in the art may understand that the terminal 800 further includes the power supply (such as a battery) for supplying power to the components. The power supply may be logically connected to the processor 810 by using a power management system, thereby implementing functions such as charging, discharging, and power consumption management by using the power management system. The electronic device structure shown in FIG. 8 constitutes no limitation on the electronic device, and may include more or fewer components than those shown in the figure, or some components may be combined, or a different component deployment may be used. Details are not described herein again.

The radio frequency unit 801 is configured to send a leaving message to a network side.

The radio frequency unit 801 or the processor 810 is configured to start a leaving wait timer.

The processor 810 is configured to perform a leaving network operation in a first case, where the first case includes any one of the following:
the leaving wait timer expires; and
a target message is received before the leaving wait timer expires.

The radio frequency unit 801 or the processor 810 starts the leaving wait timer in a case that the radio frequency unit 801 sends the leaving message to the network side.

Optionally, the target message includes at least one of the following:
an acknowledgment message fed back by a radio link control RLC layer of the terminal, where the acknowledgment message is used to acknowledge successful sending of the leaving message;
a leaving response message sent by the network side; and
a first radio resource control RRC release message sent by the network side.

Optionally, the leaving response message includes at least one of the following:
a non-access stratum NAS service accept message; and
a second RRC release message.

Optionally, the leaving network operation includes at least one of the following:
locally releasing an RRC connection;
switching to an inactive state or an idle state;
stopping data sending for the RRC connection; and
stopping data reception for the RRC connection.

Optionally, the leaving wait timer includes:
a NAS leaving wait timer or an RRC leaving wait timer.

Optionally, starting the RRC leaving wait timer includes:
starting the RRC leaving wait timer when an RRC layer of the terminal sends the leaving message to the RLC layer; or
starting the RRC leaving wait timer when an RRC layer of the terminal receives the leaving message sent by a NAS.

Optionally, starting the NAS leaving wait timer includes:
starting the NAS leaving wait timer when a NAS of the terminal sends the leaving message to an RRC layer.

Optionally, if the first case includes that a target message is received before the leaving wait timer expires, the method further includes:
stopping the leaving wait timer in a case that the target message is received before the leaving wait timer expires.

Optionally, the leaving message is used to request to suspend a service, or the leaving message is used to request to release a connection.

Optionally, the leaving message includes at least one of the following:
a service request message;
a terminal assistance information message; and
an RRC leaving message.

Optionally, duration of the leaving wait timer is agreed in a protocol, or duration of the leaving wait timer is configured by using the following message:
a system message, a NAS message, or an RRC message.

Optionally, the terminal corresponds to a plurality of UEs, the leaving message is sent by first UE in the plurality of UEs, and duration of the leaving wait timer is associated with at least one of the following:
a state of the first UE, a service of the first UE, or a request service of second UE in the plurality of UEs.

The terminal can reduce a delay of the terminal leaving the network.

Optionally, an embodiment of this application further provides a terminal, including a processor 810, a memory 809, and a program or an instruction stored in the memory 809 and executable on the processor 810. When the program or the instruction is executed by the processor 810, the processes of the embodiments of the method for leaving a network are implemented, and a same technical effect can be achieved. To avoid repetition, details are not described herein again.

The embodiments of this application further provide a readable storage medium, storing a program or an instruction, where when executed by a processor, the program or the instruction implements the processes of the embodiment of the method for leaving a network and can achieve the same technical effects. To avoid repetition, details are not described herein again.

The processor is a processor in the terminal or the network device in the foregoing embodiments. The readable storage medium may include a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or an instruction, to implement the processes in the embodiments of the method for leaving a network, and a same technical effect can be achieved. To avoid repetition, details are not described herein again.

It should be understood that, the chip mentioned in this embodiment of this application may also be referred to as a system on a chip, a system chip, a chip system, a system-on-chip, or the like.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the related art may be implemented in the form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, the present disclosure is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A method for leaving a network, applied to a terminal, and comprising:
sending a leaving message to a network side, and starting a leaving wait timer; and
performing a leaving network operation in a first case, wherein the first case comprises any one of the following:
the leaving wait timer expires; and
a target message is received before the leaving wait timer expires.

2. The method according to claim 1, wherein the target message comprises at least one of the following:
an acknowledgment message fed back by a radio link control RLC layer of the terminal, wherein the acknowledgment message is used to acknowledge successful sending of the leaving message;
a leaving response message sent by the network side; and
a first radio resource control RRC release message sent by the network side.

3. The method according to claim 2, wherein the leaving response message comprises at least one of the following:
a non-access stratum NAS service accept message; and
a second RRC release message.

4. The method according to claim 1, wherein the leaving network operation comprises at least one of the following:
releasing an RRC connection;
switching to an inactive state or an idle state;
stopping data sending for the RRC connection; and
stopping data reception for the RRC connection.

5. The method according to claim 1, wherein the leaving wait timer comprises:
a NAS leaving wait timer or an RRC leaving wait timer.

6. The method according to claim 5, wherein starting the RRC leaving wait timer comprises:
starting the RRC leaving wait timer when an RRC layer of the terminal sends the leaving message to the RLC layer; or
starting the RRC leaving wait timer when an RRC layer of the terminal receives the leaving message sent by a NAS.

7. The method according to claim 5, wherein starting the NAS leaving wait timer comprises:
starting the NAS leaving wait timer when a NAS of the terminal sends the leaving message to an RRC layer.

8. The method according to claim 1, wherein if the first case comprises that a target message is received before the leaving wait timer expires, the method further comprises:
stopping the leaving wait timer in a case that the target message is received before the leaving wait timer expires.

9. The method according to claim 1, wherein the leaving message is used to request to suspend a service, or the leaving message is used to request to release a connection.

10. The method according to claim 1, wherein the leaving message comprises at least one of the following:
a service request message;
a terminal assistance information message; and
an RRC leaving message.

11. The method according to claim 1, wherein duration of the leaving wait timer is agreed in a protocol, or duration of the leaving wait timer is configured by using the following message:
a system message, a NAS message, or an RRC message.

12. The method according to claim 1, wherein the terminal corresponds to a plurality of UEs, the leaving message is sent by first UE in the plurality of UEs, and duration of the leaving wait timer is associated with at least one of the following:
a state of the first UE, a service of the first UE, or a request service of second UE in the plurality of UEs.

13. An apparatus for leaving a network, applied to a terminal, and comprising:
a first module, configured to send a leaving message to a network side, and start a leaving wait timer; and
a second module, configured to perform a leaving network operation in a first case, wherein the first case comprises any one of the following:
the leaving wait timer expires; and
a target message is received before the leaving wait timer expires.

14. The apparatus according to claim 1, wherein the target message comprises at least one of the following:
an acknowledgment message fed back by a radio link control RLC layer of the terminal, wherein the acknowledgment message is used to acknowledge successful sending of the leaving message;
a leaving response message sent by the network side; and
a first radio resource control RRC release message sent by the network side.

15. The apparatus according to claim 14, wherein the leaving response message comprises at least one of the following:
a non-access stratum NAS service accept message; and
a second RRC release message.

16. The apparatus according to claim 13, wherein the leaving network operation comprises at least one of the following:
releasing an RRC connection;
switching to an inactive state or an idle state;
stopping data sending for the RRC connection; and
stopping data reception for the RRC connection.

17. The apparatus according to claim 13, wherein the leaving wait timer comprises:
a non-access stratum NAS leaving wait timer or an RRC leaving wait timer.

18. The apparatus according to claim 17, wherein starting the RRC leaving wait timer comprises:
starting the RRC leaving wait timer when an RRC layer of the terminal sends the leaving message to the RLC layer; or
starting the RRC leaving wait timer when an RRC layer of the terminal receives the leaving message sent by a NAS.

19. The apparatus according to claim 17, wherein starting the NAS leaving wait timer comprises:
starting the NAS leaving wait timer when a NAS of the terminal sends the leaving message to an RRC layer.

20. The apparatus according to claim 13, wherein if the first case comprises that a target message is received before the leaving wait timer expires, the method further comprises:
stopping the leaving wait timer in a case that the target message is received before the leaving wait timer expires.

21. The apparatus according to claim 13, wherein the leaving message is used to request to suspend a service, or the leaving message is used to request to release a connection.

22. The apparatus according to claim 13, wherein the leaving message comprises at least one of the following:
a service request message;
a terminal assistance information message; and
an RRC leaving message.

23. The apparatus according to claim 13, wherein duration of the leaving wait timer is agreed in a protocol, or duration of the leaving wait timer is configured by using the following message:
a system message, a NAS message, or an RRC message.

24. The apparatus according to claim 13, wherein the terminal corresponds to a plurality of UEs, the leaving message is sent by first UE in the plurality of UEs, and duration of the leaving wait timer is associated with at least one of the following:
a state of the first UE, a service of the first UE, or a request service of second UE in the plurality of UEs.

25. A terminal, comprising: a memory, a processor, and a program or an instruction stored in the memory and executable on the processor, wherein when the program or the instruction is executed by the processor, the steps in the method for leaving a network according to any one of claims 1 to 12 are implemented.

26. A readable storage medium, wherein the readable storage medium stores a program or an instruction, and when the program or the instruction is executed by a processor, the steps in the method for leaving a network according to any one of claims 1 to 12 are implemented.
